(19) Europäisches Patentamt
European Patent Office
Office européen des brevets

(11) **EP 1 896 365 B1**

(12) **FASCICULE DE BREVET EUROPEEN**

(45) Date de publication et mention
de la délivrance du brevet:
**20.06.2012 Bulletin 2012/25**

(21) Numéro de dépôt: **06778717.6**

(22) Date de dépôt: **29.06.2006**

(51) Int Cl.:
*C01G 25/02* (2006.01)    *C23G 1/36* (2006.01)

(86) Numéro de dépôt international:
**PCT/FR2006/001525**

(87) Numéro de publication internationale:
**WO 2007/003769 (11.01.2007 Gazette 2007/02)**

(54) **PROCEDE DE RECYCLAGE DE TETRAFLUORURE DE ZIRCONIUM EN ZIRCONE**

VERFAHREN ZUR REZYKLIERUNG VON ZIRCONIUMTETRAFLUORID ZUR BILDUNG VON ZIRCONIUMOXID

METHOD FOR RECYCLING ZIRCONIUM TETRAFLUORIDE TO FORM ZIRCONIA

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **30.06.2005 FR 0506697**

(43) Date de publication de la demande:
**12.03.2008 Bulletin 2008/11**

(73) Titulaire: **Compagnie Européenne du Zirconium - CEZUS**
**75442 Paris Cedex 09 (FR)**

(72) Inventeurs:
• **CHITTARO, Léonard**
**F-73400 Ugine (FR)**
• **LASALMONIE, David**
**F-38420 Le Versond (FR)**

(74) Mandataire: **Colombet, Alain André et al**
**Cabinet Lavoix**
**2, Place d'Estienne d'Orves**
**75441 Paris Cedex 09 (FR)**

(56) Documents cités:
**GB-A- 815 425**

• **YOKOYAMA M ET AL: "Vapor phase growth of stabilized zirconia crystals by hydrolysis of zirconium fluoride" JOURNAL OF CRYSTAL GROWTH NETHERLANDS, vol. 78, no. 2, novembre 1986 (1986-11), pages 418-420, XP002375778 ISSN: 0022-0248**

**Description**

La présente invention est relative à un procédé de recyclage du zirconium à partir de tétrafluorure de zirconium, en particulier des solutions de ce tétrafluorure issues des procédés de décapage des alliages en zirconium.

Les assemblages combustibles pour réacteur nucléaire et en particulier les assemblages de combustible pour réacteur nucléaire à eau légère sont généralement constitués par un faisceau de crayons combustibles parallèles entre eux et maintenus par une ossature comportant en particulier des tubes-guides longitudinaux et des grilles-entretoises transversales.

Les crayons de combustible peuvent être constitués par une gaine en alliage de zirconium dans laquelle sont introduites des pastilles de matériau combustible. Les tubes-guides de l'ossature peuvent être également constitués par des tubes de zirconium.

La fabrication des tubes en zirconium à partir d'ébauches nécessite plusieurs passes successives de laminage à froid qui sont suivies chacune d'un traitement thermique de recuit. Entre chacune des passes de laminage à froid et le traitement thermique consécutif, on effectue un dégraissage et un décapage chimique du tube laminé.

Des produits plats, tels que tôles, feuillards, sont également produits en alliage de zirconium et font aussi l'objet d'un décapage chimique, comme peuvent l'être aussi les semi-produits, servant à leur production.

Le décapage chimique des pièces en alliage de zirconium est réalisé en utilisant une solution d'acide fluorhydrique HF contenant une certaine proportion d'acide nitrique $HNO_3$ servant de catalyseur de l'attaque du zirconium par l'acide fluorhydrique, selon la réaction chimique $Zr + 4HF \rightarrow ZrF_4 + 2H_2$.

La solution de décapage usagée qui est récupérée dans un réservoir de stockage après le décapage renferme principalement de l'acide fluorhydrique, de l'eau et de l'acide nitrique ainsi que du fluorure de zirconium $ZrF_4$ formé lors du décapage.

Les bains de décapage d'alliage de zirconium peuvent être traités pour séparer l'eau de la solution des produits résiduels tels que $ZrF_4$, qui sont ensuite généralement mis en décharge.

EP-A-0 723 038 de la société Zircotube décrit un procédé de recyclage des solutions de décapage usagées, dans lequel :

- on évapore sous vide, puis on condense une partie de l'eau contenue dans la solution usagée de manière à obtenir de l'eau légèrement acide et une solution acide concentrée contenant du $ZrF_4$, représentant à peu près 30% en volume de la solution usagée,
- on traite par évaporation sous vide dans un cristalliseur, la solution acide concentrée contenant du $ZrF_4$, de manière à obtenir des cristaux de $ZrF_4$ et une solution acide concentrée épurée, et
- on mélange l'eau légèrement acide et la solution acide concentrée épurée en proportions voulues pour obtenir une solution de décapage régénérée.

A l'issue de l'évaporation appliquée à la solution acide concentrée contenant du $ZrF_4$, il reste dans le fond du cristalliseur, une suspension ou saumure de cristaux de $ZrF_4$. Ces cristaux peuvent être séparés de la solution aqueuse sur un filtre tel qu'un filtre-presse, avant évacuation vers un centre de stockage.

Les unités de production de pièces en alliage de zirconium doivent donc supporter des frais importants relatifs à la séparation et à la mise en décharge dans des centres agréés. Une proportion non négligeable de zirconium est perdu et non valorisé.

Disposer d'un procédé efficace et économique de recyclage du zirconium à partir de ce $ZrF_4$ serait doublement avantageux en limitant les pertes de zirconium métal dans l'ensemble du processus de production de pièces en alliage de zirconium et en diminuant les coûts liés à la mise en décharge.

Différentes méthodes ont été étudiées sans qu'aucune n'ait pu aboutir à une application industrielle :

• La réduction du tétrafluorure par calciothermie. C'est une réduction fortement exothermique qui doit se faire en bombe sous atmosphère inerte pour éviter une contamination du métal par l'oxygène et par l'azote. Elle est donc dangereuse pour des quantités industrielles. La réaction est la suivante :

$$ZrF_4 + 2Ca \rightarrow Zr + 2CaF_2$$

• Une électrolyse directe du tétrafluorure a été étudiée, mais il faut prévoir une installation trop complexe.
• La réduction par Van Arkel est une technique non adaptée car la molécule de $ZrF_4$ est trop stable. Sa chaleur de décomposition demanderait une température de filament supérieure au point de fusion du zirconium.
• Une autre méthode est la calcination. Elle consiste à porter à haute température le tétrafluorure de zirconium. Il se décompose alors en zircone en libérant des molécules d'acide fluorhydrique et de l'eau. Les stades successifs de la décomposition thermique du $ZrF_4$ selon le Pascal (Nouveau traité de chimie minérale, tome IX, Masson éditeur, 1963, p. 519) figurent ci-dessous. Ils s'accompagnent du dégagement successivement de vapeur d'eau, de gaz HF et enfin de $ZrF_4$ sous forme gazeuse.

$$ZrF_4,3H_2O \xrightarrow{96°C;\ -2H_2O} ZrF_4,H_2O$$

$$ZrF_4,H_2O \xrightarrow{265°C;\ -HF} ZrOHF_3$$

$$ZrOHF_3 \xrightarrow{305°C;\ -HF} ZrOF_2$$

$$ZrOF_2 \xrightarrow{1100°C;\ -\frac{1}{2}ZrF_4} \frac{1}{2}ZrO_2$$

Finch et al, "Growth of monoclinic macrocrystalline ZrO2 by hydrolysis of ZrF4-LiF-NaF melts at 650-800°C", J. Crys. Growth, 60 (1982) 321-324, décrit un procédé pour préparer du $ZrO_2$ monoclinique par réaction entre $ZrF_4$-LiF-NaF liquide et du vapeur d'eau à 650-800°C. Le $ZrF_4$-LiF-NaF liquide est préparé à partir de poudres de $ZrF_4$.

Il n'existe à ce jour aucun procédé qui permette de recycler efficacement au niveau industriel le zirconium contenu dans les bains de décapage des alliages de zirconium et ceci notamment dans des conditions de température industriellement acceptables. En effet, le caractère fortement corrosif des composés en présence est une difficulté dont l'effet s'accroit avec la température.

L'invention a donc pour objectif de proposer un procédé permettant de récupérer le zirconium à partir d'une source de $ZrF_4$, sous une forme valorisable.

Un autre objectif est de proposer un tel procédé qui soit adapté au retraitement des bains de décapage des alliages de zirconium.

Un autre objectif de l'invention est de proposer un tel procédé qui puisse être mis en oeuvre à des températures raisonnables, compatibles avec des critères économiques (coût énergétique) et limitant les phénomènes associés de corrosion de l'installation industrielle correspondante.

Ces objectifs sont atteints conformément à l'invention, par un procédé de conversion thermique d'un tétrafluorure de Zr ($ZrF_4$) en un dioxyde de Zr (zircone ou $ZrO_2$), dans lequel on réalise une conversion thermique à partir de $ZrF_4$ solide et d'eau chauffés dans un réacteur jusqu'à conversion en $ZrO_2$, caractérisé en ce que le ratio initial en poids de $ZrF_4$ par rapport à l'eau est compris entre 1/5 et 1/500 et la température est compris entre 300 et 600°C.

De manière inattendue on s'aperçoit qu'en présence d'eau, la réaction de calcination a lieu à relativement basse température et conduit dans un temps relativement court, à de la zircone. Ce nouveau procédé conduit donc à produire de la zircone qui peut être utilisée ensuite telle quelle dans diverses applications en fonction de sa pureté et de sa surface spécifique, ou comme source de zirconium dans la production d'alliages de zirconium dans le domaine nucléaire notamment.

Le procédé selon l'invention peut être conduit jusqu'à obtenir un produit de réaction dans lequel la totalité ou la quasi-totalité du zirconium est sous forme de zircone $ZrO_2$.

Le ratio initial, c'est-à-dire le rapport entre le poids de $ZrF_4$ sur le poids d'eau au début de la réaction de calcination, peut être compris entre 1/5 et 1/500, de préférence entre 1/10 et 1/200, mieux entre 1/15 et 1/100. Le début de la réaction de calcination correspond au moment où le mélange réactionnel initial eau et tétraflurorure de zirconium, se trouve à la température de calcination (voir *infra*).

De préférence on maintien un tel ratio sensiblement tout au long de la réaction, par un apport d'eau régulé suivant la méthode retenue (injection, bullage, etc., sous forme liquide ou vapeur) comme expliqué *supra.* Du fait de la consommation du tétraflurorure de zirconium, la quantité d'eau à apporter pourra diminuer au cours du temps.

Il a été constaté que la température nécessaire à la conversion thermique est inférieure à ce qu'elle serait pour obtenir la même conversion en dioxyde en l'absence d'eau. On a aussi constaté que la durée de la réaction est raccourcie, ou qu'il est possible de raccourcir cette durée en jouant sur des paramètres tels que la température, un accroissement modéré de cette température étant malgré tout un facteur influant positivement sur la cinétique de la réaction.

Ainsi, la conversion thermique est effectuée à une température comprise entre 300 et 600 °C, mieux encore entre 350 et 450 °C.

De préférence, la conversion thermique est conduite sous atmosphère de gaz neutre, de préférence argon, ou à l'air. De préférence, on fait circuler le gaz neutre ou l'air à l'intérieur du réacteur de façon à entraîner le gaz fluorhydrique HF qui se forme au fur et à mesure de la réaction. Ce HF peut être récupéré par toute technique usuelle, par exemple par dissolution dans l'eau.

Suivant un premier mode de réalisation, le tétrafluorure de zirconium est introduit dans le réacteur sous forme solide, de préférence pulvérulente.

Suivant un deuxième mode de réalisation, le tétrafluorure de zirconium est introduit dans le réacteur en suspension aqueuse ou saumure.

L'eau peut être apportée dans le réacteur au cours de la réaction, sous forme liquide ou sous forme de vapeur. Elle peut être injectée en un ou plusieurs endroits dans le réacteur, ou être admise au travers de la masse réactionnelle, par exemple par bullage ou injection sous pression.

Le $ZrF_4$ de départ ou une suspension aqueuse le contenant peut être issu d'une solution usagée de décapage d'un alliage de zirconium, telle que décrite dans EP-A-0 723 038, qui contient en général de l'acide nitrique, de l'acide fluorhydrique, de l'eau et du $ZrF_4$. Cette solution peut être traitée avant conversion pour en éliminer une partie de l'eau. Ainsi, l'on peut procéder à l'évaporation d'une partie au moins de l'eau présente dans la solution usagée et à la cristallisation du $ZrF_4$, puis à la récupération d'une saumure ou suspension aqueuse de $ZrF_4$ cristallisé, que l'on engage dans le processus de conversion thermique.

Avantageusement, on peut en même temps régénérer la solution de décapage et récupérer le zirconium, en combinant la technique de régénération selon EP-A-0 723 038, auquel l'homme du métier pourra se référer pour plus de détails, et la conversion thermique selon l'invention.

Ainsi, le procédé de recyclage du $ZrF_4$ et de régénération de la solution usagée de décapage d'alliage de zirconium, peut comprendre les étapes suivantes :

- on évapore sous vide, puis on condense une partie de l'eau contenue dans la solution usagée de manière à obtenir de l'eau légèrement acide et une solution acide concentrée polluée par du $ZrF_4$, représentant par exemple à peu près 30% en volume de la solution usagée,
- on traite par évaporation sous vide dans un cristalliseur, la solution acide concentrée polluée, de manière à obtenir des cristaux de $ZrF_4$ et une solution acide concentrée épurée,
- on récupère la saumure ou suspension aqueuse de $ZrF_4$ cristallisé au fond du cristalliseur, que l'on engage dans le processus de conversion thermique, et
- on mélange l'eau légèrement acide et la solution acide concentrée épurée en proportions voulues pour obtenir une solution de décapage régénérée.

Comme décrit dans EP-A-0 723 038, la saumure contenant du $ZrF_4$ peut être encore concentrée, par exemple par filtration, e.g. sur filtre-presse, conduisant à un gateau plus ou moins hydraté.

Le $ZrF_4$ de départ peut comprendre des impuretés qui ne nuisent par à la conduite du procédé de calcination.

A noter que dans la présente demande, l'eau peut être apportée par une solution aqueuse appropriée, de sorte que l'emploi du terme « eau » englobe l'emploi d'une telle solution aqueuse.

Lors de la conversion thermique, le mélange réactionnel est de préférence agité. Pour assurer une mise en contact optimale, tout au long de la réaction, entre l'eau et les espèces à base de zirconium et de fluor, l'homme du métier a à sa disposition tout un éventail de réacteurs ou autres dispositifs permettant d'assurer cette mise en contact. On peut ainsi employer un four tournant et/ou un four muni d'un ou plusieurs dispositifs d'agitation appropriés. L'agitation peut également être induite par l'injection d'eau, par exemple sous forme de bullage de vapeur d'eau, afin de former un lit fluidisé.

L'invention va être maintenant décrite plus en détails à l'aide de modes de réalisation pris à titre d'exemples non limitatifs.

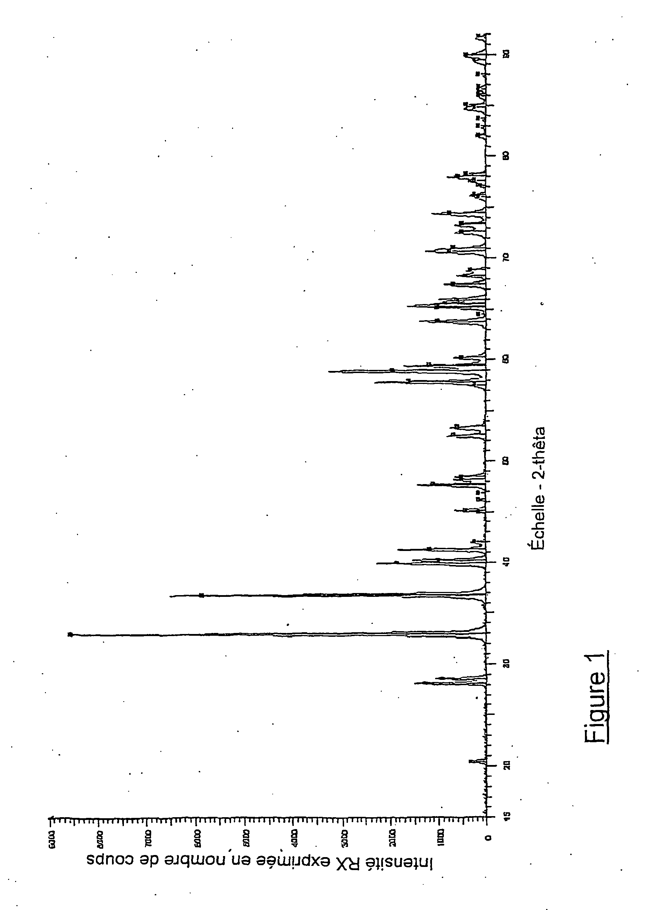

La figure 1 est le diagramme de diffraction aux rayons X du produit obtenu dans le réacteur à l'issue du procédé.

On a utilisé un four tubulaire horizontal qui est mis en rotation pour assurer l'agitation du mélange réactionnel. A l'intérieur de ce four se trouve le réacteur proprement dit, ce réacteur étant conformé de manière à permettre la réalisation d'un flux de gaz neutre, en l'occurrence argon, afin d'entraîner et d'évacuer les gaz acides qui vont se former (HF). Le four est muni d'un système de réglage et de régulation de la température.

Les paramètres des essais réalisés sont énumérés dans le tableau 1 ci-dessous, sachant que le tétrafluorure de zirconium a été introduit sous forme solide anhydre.

| Essai | Pression Ar (bar) | Débit Ar ($l.h^{-1}$) | Volume d'eau injecté en ml | Durée en minutes | Température en °C | Masse de $ZrF_4$ en g |
|---|---|---|---|---|---|---|
| 1 | 0,4 | 250 | 500 | 200 | 685 | 9,187 |
| 2 | 0,4 | 250 | 500 | 200 | 500 | 8,050 |
| 3 | 0,4 | 250 | 500 | 200 | 600 | 8,040 |

(suite)

| Essai | Pression Ar (bar) | Débit Ar (l.h$^{-1}$) | Volume d'eau injecté en ml | Durée en minutes | Température en °C | Masse de ZrF$_4$ en g |
|---|---|---|---|---|---|---|
| 4 | 0,4 | 250 | 500 | 200 | 550 | 8,000 |
| 5 | 0,4 | 250 | 250 | 200 | 550 | 8,050 |

A l'issue de la durée de réaction indiquée au tableau 1, il a été procédé à une analyse de la composition dans le réacteur, par diffraction aux rayons X à l'aide de la radiation du cobalt monochromatique (longueur d'onde = 0,179 nm ; temps de comptage = 1 heure).

Le diagramme de diffraction aux rayons X du produit obtenu à l'issue de chacun des essais 1 à 5 est celui de la zircone monoclinique de type Baddeleyite. Ce diagramme est représenté à la figure 1, avec en abscisse l'échelle 2-thêta et en ordonnée l'intensité des rayons X exprimée en nombre de coups.

Le procédé de l'invention permet donc d'obtenir de la zircone pure rapidement et dans des conditions économiques favorables, à partir de tétrafluorure de zirconium.

**Revendications**

1. Procédé pour convertir ZrF$_4$ en ZrO$_2$, dans lequel on réalise une conversion thermique à partir de ZrF$_4$ solide et d'eau chauffés dans un réacteur jusqu'à conversion en ZrO$_2$, **caracterisé en ce que** le ratio initial en en poids de ZrF$_4$ par rapport à l'eau est compris entre 1/5 et 1/500 et la température est comprise entre 300 et 600°C.

2. Procédé selon la revendication 1, **caractérisé en ce que** le ZrF$_4$ de départ est en suspension dans l'eau.

3. Procédé selon la revendication 1 ou 2, **caractérisé en ce que** le ratio initial en poids ZrF$_4$ sur eau est compris entre 1/10 et 1/200, mieux entre 1/15 et 1/100.

4. Procédé selon la revendication 3, **caractérisé en ce que** ce ratio est maintenu sensiblement tout au long de la conversion.

5. Procédé selon l'une quelconque des revendications précédentes, **caractérisé en ce que** la conversion thermique est effectuée à une température comprise entre 350 et 450 °C.

6. Procédé selon l'une quelconque des revendications précédentes, **caractérisé en ce que** la conversion thermique est conduite sous atmosphère de gaz neutre, de préférence argon, ou à l'air.

7. Procédé selon l'une quelconque des revendications précédentes, **caractérisé en ce que** le ZrF$_4$ de départ ou une suspension aqueuse le contenant est issu d'une solution usagée de décapage d'un alliage de zirconium.

8. Procédé selon la revendication 7 , **caractérisé en ce que** l'on procède à l'évaporation d'une partie au moins de l'eau présente dans la solution usagée et à la cristallisation du ZrF$_4$, puis l'on récupère une saumure ou suspension aqueuse de ZrF$_4$ cristallisé, que l'on engage dans le processus de conversion thermique.

9. Procédé selon la revendication 8 pour le recyclage du ZrF$_4$ et la régénération de la solution usagée de décapage d'alliage de zirconium, comprenant les étapes suivantes:

   - on évapore sous vide, puis on condense une partie de l'eau contenue dans la solution usagée de manière à obtenir de l'eau légèrement acide et une solution acide concentrée polluée par du ZrF$_4$,
   - on traite par évaporation sous vide dans un cristalliseur, la solution acide concentrée polluée, de manière à obtenir des cristaux de ZrF$_4$ et une solution acide concentrée épurée,
   - on récupère la saumure ou suspension aqueuse de ZrF$_4$ cristallisé au fond du cristalliseur, que l'on engage dans le processus de conversion thermique, et
   - on mélange l'eau légèrement acide et la solution acide concentrée épurée en proportions voulues pour obtenir une solution de décapage régénérée.

10. Procédé selon la revendication 8 ou 9, **caractérisé en ce que** la saumure contenant du $ZrF_4$ est encore concentrée, par exemple par filtration, avant son engagement dans le processus de conversion thermique.

**Claims**

1. Process for converting $ZrF_4$ into $ZrO_2$ wherein there is carried out thermal conversion from solid $ZrF_4$ and water which are heated in a reactor until conversion to $ZrO_2$ occurs, **characterised in that** the initial weight ratio of $ZrF_4$ to water is from 1/5 to 1/500 and the temperature is from 300 to 600°C.

2. Process according to claim 1, **characterised in that** the initial $ZrF_4$ is suspended in water.

3. Process according to either claim 1 or claim 2, **characterised in that** the initial weight ratio of $ZrF_4$ to water is from 1/10 to 1/200, preferably from 1/15 to 1/100.

4. Process according to claim 3, **characterised in that** that ratio is maintained substantially throughout the conversion.

5. Process according to any one of the preceding claims, **characterised in that** the thermal conversion is carried out at a temperature of from 350 to 450°C.

6. Process according to any one of the preceding claims, **characterised in that** the thermal conversion is carried out under a neutral gas atmosphere, preferably argon, or air.

7. Process according to any one of the preceding claims, **characterised in that** the initial $ZrF_4$ or an aqueous suspension containing it originates from a used solution for pickling a zirconium alloy.

8. Process according to claim 7, **characterised in that** at least a portion of the water present in the used solution is evaporated off and $ZrF_4$ is crystallised out, and then a brine or aqueous suspension of crystallised $ZrF_4$ is recovered, which is used in the thermal conversion process.

9. Process according to claim 8 for recycling $ZrF_4$ and regenerating the used zirconium alloy-pickling solution, comprising the following steps:

   - evaporation *in vacuo* is carried out, followed by condensation of a portion of the water contained in the used solution to obtain slightly acidic water and a concentrated acid solution contaminated with $ZrF_4$,
   - the concentrated contaminated acid solution is treated by evaporation *in vacuo* in a crystalliser to obtain $ZrF_4$ crystals and a purified concentrated acid solution,
   - the brine or aqueous suspension of $ZrF_4$ crystallised at the bottom of the crystalliser is recovered and is used in the thermal conversion process, and
   - the slightly acidic water and the purified concentrated acid solution are combined in desired proportions to obtain a regenerated pickling solution.

10. Process according to either claim 8 or claim 9, **characterised in that** the brine containing the $ZrF_4$ is concentrated further, for example by filtration, before being used in the combustion process.

**Patentansprüche**

1. Verfahren zum Umwandeln von $ZrF_4$ in $ZrO_2$, bei dem eine thermische Umwandlung ausgehend von festem $ZrF_4$ und Wasser vorgenommen wird, die in einem Reaktor bis zur Umwandlung in $ZrO_2$ erwärmt werden, **dadurch gekennzeichnet, dass** das Ausgangsgewichtsverhältnis von $ZrF_4$ in Bezug auf das Wasser zwischen 1/5 und 1/500 und die Temperatur zwischen 300 und 600°C liegt.

2. Verfahren nach Anspruch 1, **dadurch gekennzeichnet, dass** das Ausgangs-$ZrF_4$ in Suspension in Wasser ist.

3. Verfahren nach Anspruch 1 oder 2, **dadurch gekennzeichnet, dass** das Ausgangsgewichtsverhältnis von $ZrF_4$ zu Wasser zwischen 1/10 und 1/200, besser zwischen 1/15 und 1/100 liegt.

**4.** Verfahren nach Anspruch 3, **dadurch gekennzeichnet, dass** das Verhältnis im Wesentlichen während der gesamten Umwandlung beibehalten wird.

**5.** Verfahren nach einem beliebigen der vorhergehenden Ansprüche, **dadurch gekennzeichnet, dass** die thermische Umwandlung bei einer Temperatur zwischen 350 und 450°C durchgeführt wird.

**6.** Verfahren nach einem beliebigen der vorhergehenden Ansprüche, **dadurch gekennzeichnet, dass** die thermische Umwandlung unter Neutralgasatmosphäre, vorzugsweise unter Argon oder Luft durchgeführt wird.

**7.** Verfahren nach einem beliebigen der vorhergehenden Ansprüche, **dadurch gekennzeichnet, dass** das Ausgangs-$ZrF_4$ oder eine es enthaltende wässrige Suspension aus einer gebrauchten Beizlösung einer Zirkoniumlegierung stammt.

**8.** Verfahren nach Anspruch 7, **dadurch gekennzeichnet, dass** mindestens ein Teil des in der gebrauchten Lösung vorhandenen Wassers verdampft und das $ZrF_4$ kristallisiert wird, dann eine Salzlösung oder eine wässrige Suspension des kristallisierten $ZrF_4$ rückgewonnen wird, die in den Prozess der thermischen Umwandlung eingeführt wird.

**9.** Verfahren nach Anspruch 8 für das Recycling von $ZrF_4$ und die Rückgewinnung der gebrauchten Beizlösung der Zirkoniumlegierung, folgende Schritte umfassend:

- ein Teil des in der gebrauchten Lösung enthaltenen Wassers wird unter Vakuum verdampft und dann kondensiert, derart, dass leicht saures Wasser und eine konzentrierte, durch $ZrF_4$ verunreinigte saure Lösung erhalten wird,
- die konzentrierte verunreinigte saure Lösung wird in einem Kristallisator unter Vakuum durch Verdampfung behandelt, derart, dass $ZrF_4$-Kristalle und eine gereinigte konzentrierte saure Lösung erhalten wird,
- die Salzlösung oder wässrige Suspension des kristallisierten $ZrF_4$ am Boden des Kristallisators wird rückgewonnen, die in den Prozess der thermischen Umwandlung eingeführt wird, und
- das leicht saure Wasser und die gereinigte, konzentrierte saure Lösung werden in gewünschten Anteilen gemischt, um eine regenerierte Beizlösung zu erhalten.

**10.** Verfahren nach Anspruch 8 oder 9, **dadurch gekennzeichnet, dass** die $ZrF_4$ enthaltende Salzlösung vor dem Einführen in den Prozess der Umwandlung noch einmal konzentriert wird, z.B. durch Filterung.

EP 1 896 365 B1

Figure 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0723038 A

**Littérature non-brevet citée dans la description**

- **LE PASCAL.** Nouveau traité de chimie minérale. 1963, 519

- **FINCH et al.** Growth of monoclinic macrocrystalline ZrO2 by hydrolysis of ZrF4-LiF-NaF melts at 650-800°C. *J. Crys. Growth,* 1982, vol. 60, 321-324